(19) Europäisches Patentamt

European Patent Office

Office européen des brevets

(11) **EP 0 554 751 B1**

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(51) Int. Cl.⁶: **C04B 24/38**, C04B 24/16, C08B 11/10, C08B 11/193

(21) Anmeldenummer: 93101076.3

(22) Anmeldetag: **25.01.1993**

(54) **Wasserlösliche, veretherte Sulfoalkylderivate der Cellulose als Additive in gips- und zementhaltigen Massen**

Water-soluble, ehterified sulfoalkyl derivatives of cellulose as additives in gypsum and cement compositions

Hydrosolubles dérivés sulfoalkyles éthérifiés de cellulose dans compositions de gypse et de ciment

(84) Benannte Vertragsstaaten:
**BE DE FR GB IT NL SE**

(30) Priorität: **07.02.1992 DE 4203530**

(43) Veröffentlichungstag der Anmeldung:
**11.08.1993 Patentblatt 1993/32**

(73) Patentinhaber:
**Wolff Walsrode Aktiengesellschaft
D-29655 Walsrode (DE)**

(72) Erfinder:
• **Kiesewetter, René, Dr.
W-3040 Soltau-Ahlften (DE)**

• **Szablikowski, Klaus, Dr.
W-3030 Walsrode (DE)**
• **Lange, Werner, Dr.
W-2722 Visselhövede (DE)**

(74) Vertreter:
**Pettrich, Klaus-Günter, Dr. et al
c/o Bayer AG,
Konzernbereich RP
Patente und Lizenzen
51368 Leverkusen (DE)**

(56) Entgegenhaltungen:
**EP-A- 0 161 607          EP-A- 0 319 865
EP-A- 0 470 444          EP-A- 0 487 988
EP-A- 0 511 540          DE-A- 3 406 745**

**Beschreibung**

Die Erfindung betrifft wasserlösliche ionische Cellulosederivate und ihre Verwendung als Additiv für gips- und zementhaltige Massen.

Wasserlösliche Celluloseether, wie Hydroxyethylcellulose (HEC), Hydroxypropylcellulose (HPC), Methylcellulose (MC) und Mischether hieraus, sind schon seit langem unverzichtbare Hilfsmittel für verschiedene Bauwerkstoffe. Ihr Einsatzgebiet reicht vom Mauerwerk und Putzsystem der Außenwand über Gips- und Zementputze, Fugenfüller bis hin zu Spachtelmassen.

Die für die Verbesserung der Verarbeitbarkeit von Putzsystemen eingesetzten Celluloseether sind überwiegend nichtionischer Natur. Für die Verarbeitung von Gips-, Kalk- und Zementsystemen werden insbesondere Methylcellulosen bzw. deren Hydroxyalkylcellulosemischether eingesetzt. Der Kontrolle des Wasserhaushaltes im Putzsystem kommt hierbei eine überragende Bedeutung zu, da hierdurch die Verarbeitbarkeit, die Plastizität, das Abbindeverhalten, die Klebrigkeit, die "Offenzeit", der Luftporengehalt, das Standvermögen u.a. beeinflußt werden.

Für eine Verbesserung des rheologischen Eigenschaftsprofils der kommerziell erhältlichen, nichtionischen Celluloseether, wie z.B. der Hydroxyethylcellulose, wurden verschiedenste Hydrophobierungen vorgenommen (siehe z.B. US-PS 3 091 542, US-PS 3 272 640, US-PS 3 435 027, DE-OS 2 120 439). Die Umsetzung einer Hydroxyethylcellulose mit langkettigen alkylgruppen- bzw. 3-alkoxy-2-hydroxypropylgruppenübertragenden Verbindungen und deren Einsatz im Baustoffsektor allein oder als Abmischung mit Methylcellulosederivaten (z.B. DE-OS 30 20 689, DE-OS 30 04 161, US-PS 4 845 207, US-PS 4 784 693, DE-OS 39 09 070, EP 0 362 769) mit dem Ziel eines verbesserten rheologischen Eigenschaltsprofils führten bisher nicht zu dem erhofften Ergebnis. Darüber hinaus ist z.B. die Anknüpfung langkettiger Alkylgruppen an die Cellulosekette bzw. Hydroxyethylcellulose mit sehr schlechten Ausbeuten behaftet, so daß hohe Produktkosten und unvertretbare ökologische Belastungen die Folge sind.

EP-A-319 865 beschreibt ein hydrophil modifiziertes Derivat der Sulfoethylcellulose, nämlich Carboxymethyl-sulfoethylcellulose, als Verdicker für Baustoffe.

DE-A-34 06 745 beschreibt alkylsulfonierte Polysaccharide als sogenannte "Superverflüssigungsmittel" für Mörtel- und Betonmischungen. Gleichfalls den verflüssigenden Effekt von Sulfoethylcellulose beschreibt US-A-4 519 923, die den Einsatz von Alkalisalzen der Sulfoethylcellulose als Bohrhilfsmittel erwähnt.

Ein Herstellverfahren für wasserlösliche Celluloseether darunter auch sulfoethylmodifizierter Celluloseether beschreibt EP-A-161 607 ohne auf spezielle Anwendungsgebiete der entstehenden Produkte einzugehen.

Der Einsatz von ionischen Celluloseethern als Additiv für Mörtel-, Spachtel- und/oder Putzmassen auf Gips- und/oder Zementbasis ist an sich nicht neu. Aus US-PS 2 844 480, EP 0 269 015, US-PS 4 707 187, US-PS 4 462 837, US-PS 3 446 795, US-PS 4 707 188, US-PS 2 852 402 und DE 3 126 489 sind z.B. Methylcarboxymethylcelluloseether bzw. Carboxymethylhydroxyalkylcelluloseether bekannt, die als Mörtelzusatzstoffe, Additive für Unterwasserbeton sowie als Wasserverminderer für geologische Formationen eingesetzt werden. Danach führt z. B. ein Zusatz von 0,05 - 1 % Carboxymethylhydroxyethylcellulose zu einer Verbesserung der Verarbeitbarkeit des Putzsystems, was sich gegenüber einer handelsüblichen Methylhydroxypropylcellulose (MHPC) bzw. Methylhydroxyethylcellulose (MHEC) in Form einer leichteren Verarbeitbarkeit, aufgrund eines verminderten Luftprorengehaltes ausdrücken soll. Nachteilig hierbei ist jedoch die stark verflüssigende Wirkung des Putzsystems. Die somit erzielte leichtere Verarbeitbarkeit geht daher mit einem - gegenüber einer handelsüblichen MHEC bzw. MHPC - deutlich schlechteren Standvermögen einher.

Die Umsetzung einer Carboxymethylcellulose mit Ethylenoxid, Propylenoxid oder Methylchlorid führt zwar zu einer Verbesserung der Salz-, Alkali- bzw. Säurestabilität. Eine generelle Unverträglichkeit mit insbesondere mehrwertigen Kationen (z. B. $Ca^{2+}$, $Al^{3+}$) läßt sich jedoch nicht vollständig ausschließen. Starke Vergelungen oder Ausflockungen können die Folge sein (L. Brandt in: Ullmanns Encyclopedia of Industrial Chemistry, Vol. 5 A, Verlag Chemie, Weinheim/New York, 1986, Seite 479 ff, s. auch DE-OS 3 126 489 und W. Hansi in: Dtsch. Farben Ztschr. 25, 1971, S. 493 ff).

Ziel ist es daher, einen Celluloseether herzustellen und als Hilfsstoff einzusetzen, der die o. g. Nachteile vermeidet, einfach und in guten Ausbeuten herstellbar ist und über ein gegenüber den kommerziell erhältlichen Celluloseethern (HEC, MHEC, MHPC) verbessertes Wasserrückhaltevermögen verfügt, was wiederum eine Verbesserung anwendungstechnischer Parameter zur Folge hat (z. B. Standvermögen, "Offenzeit" u. a.).

Es wurde nun gefunden, daß wasserlösliche sulfoalkylmodifizierte Cellulosederivate mit Hydroxyethyl-, Hydroxypropyl-, Hydroxybutyl-, Dihydroxypropyl-, Alkyl-, speziell Methyl-, Aryl-, speziell Phenyl-, Arylalkyl-, speziell Benzyl-und/oder Alkoxyhydroxyalkyl-, speziell 3-Alkoxy-2-Hydroxyalkylgruppen als Substituent, überraschend verbesserte Eigenschaften gegenüber solchen Gips- und Zementmassen aufweisen, die als Additive herkömmliche, nichtionische Methylcellulose-, Hydroxyalkyl- und/oder Methylhydroxyalkylcellulosederivate enthalten.

Die erfindungsgemäß eigesetzten Cellulosederivate sind vollständig in Wasser löslich, verbessern das Wasserrückhaltevermögen des Putzsystems entscheidend und können nach einem der unten beschriebenen Verfahren entweder durch Modifizierung eines Celluloseethers (z. B. MC, HEC, SEC) oder direkt aus Cellulose hergestellt werden. Folgende Verbindungen sind für die Modifizierung mit sulfoalkylgruppenübertragenden Reagenzien einsetzbar:

- Hydroxyethylcellulose (HEC),
- Hydroxypropylcellulose (HPC),
- Hydroxybutylcellulose (HBC),
- Dihydroxypropylcellulose (DHPC),
- Methylcellulose (MC),
- Methylhydroxypropylcellulose (MHPC),
- Methylhydroxyethylcellulose (MHEC),
- Methylhydroxybutylcellulose (MHBC),
- Ethylcellulose (EC),
- Hydroxypropylhydroxyethylcellulose (HPHEC),
- Hydroxyethylhydroxybutylcellulose (HEHBC).

Die o. g. Verbindungen können als einfache, binäre oder ternäre Celluloseether wie auch als Abmischungen verschiedener Celluloseether mit sulfoalkylgruppen-, speziell sulfoethylgruppenübertragenden Verbindungen, modifiziert werden. Für eine Verbesserung des rheologischen Verhaltens ist vor, insbesondere aber nach der Reaktion mit sulfoalkylgruppenübertragenden Verbindungen, eine Umsetzung mit alkyl-, hydroxyalkyl-, aryl-, arylalkyl und/oder 3-alkoxy-2-hydroxyalkylgruppenübertragenden Verbindungen möglich. Die für die Modifizierung der Cellulose bzw. Cellulosederivate verwendeten Reagenzien werden an das Substrat über eine Urethan-, Ester-, insbesondere aber Etherbindung gebunden.

Die erfindungsgemäßen anionischen Cellulosederivate besitzen durchschnittliche Substitutionsgrade (DS) durch Sulfoethylgruppen von 0,001 - 0,6, vorzugsweise von 0,01 -0,5. Der durchschnittliche Substitutionsgrad (DS) durch Alkyl-, Aryl- bzw. Aryl-Alkylgruppen liegt bei DS = 0,0001 - 2,5, insbesondere bei 0,001 - 2,0. Der durchschnittliche Substitutionsgrad (MS) der mit katalytischen Mengen Alkali reagierenden Verbindungen (z. B. Epoxide, Glycidylether) liegt bei MS = 0,0001 -5, insbesondere bei 0,001 - 4. Der durchschnittliche Polymerisationsgrad der Cellulosederivate liegt zwischen ca. 30 und ca. 4.000, insbesondere zwischen 1.000 und 2.500.

Die erfindungsgemäß eingesetzten sulfoalkylsubstituierten Cellulosederivate werden auf Basis der oben genannten Celluloseether, insbesondere aber auf Basis Sulfoethylcellulose (SEC), bevorzugt in Anwesenheit von organischen Lösungsmitteln hergestellt. Als Suspensionsmittel werden aromatische und/oder aliphatische Kohlenwasserstoffe, Ketone, Sulfoxide, cyclische Ether oder niedere Alkohole mit vorzugsweise 2 - 5 Kohlenstoffatomen pro Molekül sowie Gemische dieser Lösungsmittel eingesetzt. Vorzugsweise wird Isopropanol und/oder 2-Methyl-propan-2-ol (tertiär-Butanol) bzw. Mischungen hieraus verwendet.

Die erfindungsgemäß eingesetzten Cellulosederivate können auch direkt aus Cellulose hergestellt werden. Eine hydrophobmodifizierte Hydroxyethylsulfoethylcellulose kann z. B. in der Weise dargestellt werden, daß zunächst der Zellstoff zu einer Mischung aus einem inerten organischen Suspensionsmittel und einem Alkalimetallhydroxid gegeben wird. Das sulfoalkylgruppenübertragende Reagenz, insbesondere Vinylsulfonsäure-Natriumsalz, wird dann eingetragen und mit der Alkalicellulose zur Reaktion gebracht. Nach beendeter Reaktion wird das Alkali ggf. neutralisiert oder mit wäßrig-organischen Lösungsmittelgemischen extrahiert. Ein Teil des verwendeten Alkali kann jedoch gegebenenfalls im Produkt verbleiben und für weitere Umsetzungen eingesetzt werden. Die Sulfoalkylcellulose, insbesondere Sulfoethylcellulose, kann gegebenenfalls in der in der Cellulosechemie bekannten Weise aufgearbeitet werden (siehe z. B. K. Engelskirchen, in Houben-Weyl's "Makromolekulare Stoffe", Band E 20/III, Seite 2.051 ff, Herausgeber A. Barth, J. Falbe, Georg Thieme Verlag/Stuttgart, 1987) und gegebenenfalls in einem Gemisch eines inerten, organischen Suspensionsmittels und einem Alkalimetallhydroxid suspendiert und mit Ethylenoxid zur Reaktion gebracht werden. Die sich gegebenenfalls daran anschließende Umsetzung mit weiteren Reagenzien - wie z.B. Propylenoxid, n-Butylglycidether, Methyl- oder Benzylchlorid - wird vorzugsweise in demselben organischen Suspensionsmittel durchgeführt. Nach beendeter Reaktion werden die gegebenenfalls noch vorliegenden Mengen an Alkali neutralisiert oder mit einem organisch-wäßrigen Lösungsmittelgemisch extrahiert. Das Produkt wird in der bekannten Weise aufgearbeitet und als Additiv für gips- und zementhaltige Massen eingesetzt.

Die anionischen, in Wasser löslichen Produkte besitzen Sulfoalkyl-, insbesondere Sulfoethylsubstitutionsgrade von 0,001 - 0,6, insbesondere von 0,01 - 0,5. Die Fluidität bzw. das Wasserrückhaltevermögen der sulfoethylierten Cellulosederivate wird im wesentlichen durch den Sulfoethylsubstitutionsgrad bestimmt. Ein Substitutionsgrad durch Sulfoethylgruppen von > 0,6 ist nicht sinnvoll für Anwendungen in Systemen, die ein Stehvermögen erfordern, da es dann zu einer zunehmenden verflüssigenden Wirkung und einer damit einhergehenden verschlechterten Standfestigkeit des Putzsystems kommen kann.

Bevorzugte sulfoalkylgruppenübertragende Verbindungen sind Chlorethansulfonsäure, Bromethansulfonsäure, Vinylsulfonsäure und deren Salze, insbesondere deren Natriumsalze.

Als Ausgangsmaterial werden gemahlene Cellulosen, insbesondere Linters-, Nadelholzsulfit-, Nadelholzsulfatoder Laubholzzellstoffe verwendet. Als Ausgangsmaterialien können ebenfalls kommerziell erhältliche Celluloseether, wie z. B. Hydroxyethyl- bzw. Hydroxypropylcellulosen, Methyl- bzw. Methylhydroxyethyl- bzw. Methylhydroxypropylcel-

EP 0 554 751 B1

luloseether, Ethylhydroxyethylcellulose und Ethylcellulose verwendet werden.

Die Herstellung der sulfoethylsubstituierten Cellulosederivate wird bevorzugt in einem zylindrischen Reaktionsgefäß durchgeführt, welches mit einem geeigneten Rühraggregat versehen ist und eine ausreichende Durchmischung der heterogenen Reaktionsmasse gewährleistet. Das Reaktionsgefäß ist vorzugsweise geschlossen, um eine Reaktionsführung unter Stickstoffatmosphäre zu ermöglichen. Eine ausreichende Möglichkeit zur Temperierung des Gefäßes ist vorzugsweise ebenfalls vorhanden.

Das Verfahren gliedert sich in folgende Reaktionsschritte:

a) Umsetzung von Cellulose oder eines Cellulosederivates mit Alkali in Anwesenheit mindestens eines Veretherungsmittels (Sulfoalkylierungsmittel - wie z.B. Vinylsulfonsäure - Natriumsalz - und/oder hydroxyalkylgruppenübertragende Verbindung - wie z.B. Ethylenoxid - und/oder Hydrophobierungsmittel - wie z.B. n-Butylglycidether), das eine mindestens katalytische Menge einer Base benötigt.
b) Ggf. weitere Veretherung mit mindestens einem Veretherungsmittel (hydroxyalkylgruppenübertragende Verbindung, Sulfoalkylierungsmittel, Hydrophobierungsmittel).
c) Gegebenfalls Neutralisation und Aufarbeitung durch Extraktion mit wäßrig-organischen Lösungsmittelgemischen oder - sofern die Produkte thermische Flockpunkte aufweisen - mittels heißem Wasser.

Als hydroxyalkylgruppenübertragende Verbindungen werden bevorzugt Ethylenoxid (EO), Propylenoxid (PO), Butylenoxid (BO) und Glycidol eingesetzt. Als Sulfoalkylveretherungsmittel wird Halogenethan- bzw. Vinylsulfonsäure, insbesondere Vinylsulfonsäurenatriumsalz, verwendet. Hydrophobierungsmittel sind Epoxide (z. B. Propylenoxid, Butylenoxid, Styroloxid, Cyclopentenoxid, Cyclohexenoxid), Alkylhalogenide (z. B. Methylchlorid, Ethylchlorid), Arylalkylhalogenide (z. B. Benzylchlorid) und aryloxy-, bzw. alkoxy-hydroxyalkyl-, bzw. -hydroxyaryl-, bzw. -hydroxyalkylaryl-, speziell 3-alkoxy-2-hydroxypropylgruppenübertragende Reagenzien (z. B. Isopropylglycidether, n-Butylglycidether, 2-Ethylhexylglycidether, Allylglycidether).

Die sulfoethylsubstituierten Cellulosederivate besitzen Viskositäten von 5 - 60.000 mPa·s (gemessen in 2 Gew.-%iger wäßriger Lösung bei einem Schergefälle von D = 2,5 s$^{-1}$ bei 20 °C). Die Viskositätsstufen der Produkte lassen sich durch Ausschluß oder Zugabe von oxidierenden Substanzen, wie z. B. Luft, $H_2O_2$, Metalloxiden und die Auswahl der eingesetzten Zellstoffe, die unterschiedliche Durchschnittspolymerisationsgrade aufweisen, einstellen.

Die Alkalisierung der Cellulose bzw. des Celluloseethers erfolgt in der Regel mit einem Alkalimetallhydroxid, insbesondere Natriumhydroxid, das in fester oder gelöster Form (als wäßrige Alkalimetallhydroxidlösung beispielsweise in 18 - 50 gew.-%iger Form) eingesetzt wird.

Um zu gleichmäßig veretherten Produkten zu gelangen und lokale Überhitzungen zu vermeiden, erfolgt die Alkalisierung der Cellulose bzw. des Celluloseethers und die nachfolgende, mit mindestens einem Veretherungsmittel vorgenommene Umsetzung bevorzugt in Anwesenheit von organischen Lösungsmitteln.

Die Veretherungsmittel (Alkylenoxid, Vinylsulfonsäure-Natriumsalz, Hydrophobierungsmittel) können zusammen eingegeben werden und zunächst bei vorzugsweise 10 - 60 °C und anschließend bei 40 - 120 °C und 0,5 - 6 h Reaktionszeit mit dem Alkali reagieren. Bevorzugt wird das Vinylsulfonsäure-Natriumsalz, vorzugsweise mit organischen Lösungsmitteln, zuerst mit der Alkalicellulose umgesetzt, wobei die sich daran anschließende Mischveretherung mit bzw. ohne eine Reinigung bzw. Neutralisation der in der ersten Stufe hergestellten Sulfoethylcellulose erfolgt. Insbesondere wird der Gehalt an Alkali nach der ersten Veretherungsstufe durch Neutralisation oder Extraktion mit wäßrig-organischen Lösungsmittelgemischen abgesenkt und noch vorhandene Natronlauge vorteilhaft für die zweite Veretherungsstufe eingesetzt.

Die weitere Umsetzung mit Alkylenoxiden und/oder Hydrophobierungsmitteln kann in Gegenwart oder in Abwesenheit von organischen Suspensionsmitteln bei Temperaturen von zunächst 10 - 60 °C und später von 40 -120 °C und 0,5 - 6 h Reaktionszeit ausgeführt werden.

Umgekehrt kann die Veretherung auch so vorgenommen werden, daß in der ersten Veretherungsstufe die Umsetzung von Cellulose mit einem Alkylenoxid und einem Hydrophobierungsmittel erfolgt und nachfolgend das Vinylsulfonsäure-Natriumsalz bei 40 - 120 °C, vorzugsweise in inerten organischen Suspensionsmitteln, insbesondere Isopropanol und/oder teriär-Butanol, umgesetzt wird. Eine sich daran anschließende Umsetzung mit weiteren Alkylenoxiden und/oder Hydrophobierungsmitteln ist ggf. möglich.

Das so erhaltene Produkt wird ggf. neutralisiert und vom gegebenenfalls vorhandenen Slurrymedium abgetrennt und durch Waschen mit inerten, organischen oder wäßrigorganischen Lösungsmittelgemischen, wie z. B. Alkoholen, Alkohol-Wasser-Gemischen, Ketonen bzw. Keton-Wasser-Gemischen von Nebenprodukten und ggf. noch vorliegenden Mengen Alkali bzw. anhaftenden Salzen befreit. Die Reinigung kann, wenn es sich bei der Veretherung um einen 2- bzw. 3-Stufenprozeß handelt, nach der ersten als auch nach der zweiten Stufe mit organisch-wäßrigen Lösungsmittelgemischen vorgenommen werden. Bei Einsatz stöchiometrischer Mengen von alkaliverbrauchenden Reagenzien, wie z. B. Methylchlorid, Ethylchlorid, Benzylchlorid, kann auf eine Neutralisation verzichtet werden.

Aufgrund der in der zweiten bzw. dritten Stufe ggf. vorliegenden katalytischen Menge an Alkali ist es hier auch

4

möglich, entweder das überschüssige Alkali durch geeignete, inerte, z. B. wäßrig-alkoholische Lösungsmittelgemische auszuwaschen und damit die Neutralisation zu umgehen oder bei einer Neutralisation die geringen Mengen an Salzen im Produkt zu belassen und auf eine Reinigung zu verzichten.

Besitzen die Produkte thermische Flockpunkte, so ist eine Reinigung mit heißem Wasser bei Normal- oder geringem Überdruck vorteilhaft.

Die sulfoethylmodifizierten Cellulosederivate weisen sehr gute Säure- und Alkalibeständigkeiten auf und sind im Unterschied zu Carboxymethylcellulosederivaten mit einer Vielzahl von insbesondere mehrwertigen Kationen (speziell $Ca^{2+}$, $Al^{3+}$) ausgezeichnet verträglich.

Die erfindungsgemäßen sulfoalkylierten, speziell sulfoethylierten Cellulosederivate werden als Zusatzstoffe für gips- und zementhaltige Massen eingesetzt. Die Menge des den gips- und zementhaltigen Massen zuzusetzenden Produktes ist vom jeweiligen speziellen Anwendungszweck abhängig. Bei Verputzmassen auf Gipsbasis beträgt die zuzusetzende Additivmenge bevorzugt 0,05 - 0,5 Gew.-%, bezogen auf die Gesamttrockenmasse, bei Zementverputzmassen dagegen 0,02 - 0,3 Gew.-%, bezogen auf die Gesamttrockenmasse. Die bei Spachtelmassen zuzusetzende Menge kann jedoch höher liegen. Bei Spachtelmassen auf Gipsbasis liegt sie im Bereich von 0,1 - 2 Gew.-%, bei Spachtelmassen auf Zementbasis bei 0,1 - 1 Gew.-%.

Bei den erfindungsgemäßen Celluloseethern haben die Bezeichnungen "DS" (Degree of Substitution) und "MS" (molarer Substitutionsgrad) die übliche Bedeutung.

In jeder Anhydroglukoseeinheit des Cellulosemoleküls sind drei Hydroxylgruppen vorhanden.

DS: Durchschnittsanzahl der in der Cellulose substituierten Hydroxylgruppen pro Anhydroglukoseeinheit

MS: Durchschnittsanzahl der Mole, der mit der Cellulose kombinierten Reaktionspartner pro Anhydroglukoseeinheit

Die Erfindung wird nachfolgend anhand von bevorzugten Ausführungsbeispielen sowie von Vergleichsbeispielen näher erläutert (Teile = Gew.-Teile).

Herstellung einer Hydroxyethylsulfoethylcellulose aus einer Hydroxyethylcellulose (Beispiel 1)

225 Teile einer handelsüblichen Hydroxyethylcellulose (HEC, MS = 2,5) mit einer Feuchte von 5,1 % werden in eine Mischung aus 8 Teilen Aceton und 2 Teilen Wasser eingegeben. Nach 12 h wird der Celluloseether abfiltriert und mit etwa 2.000 Teilen reinem Aceton gewaschen und scharf abgesaugt. Die acetonfeuchte HEC wird in einem mit einem geeigneten Rühraggregat versehenen zylindrischen Reaktionsgefäß, das in geeigneter Weise thermostatisierbar ist, in 2.180 Teilen tertiär-Butanol suspendiert. Der Reaktor wird mit Stickstoff gespült. Nach Zugabe von 119,4 Teilen einer 51,4 gew.-%igen Vinylsulfonsäure-Natriumsalz-Lösung wird 15 min lang gründlich durchmischt. Dann werden 157 Teile Wasser und 15,7 Teile Natriumhydroxid-Plätzchen (Prills) zugegeben und 30 min bei 25 °C alkalisiert. Innerhalb von 60 min wird auf 75 °C erwärmt und diese Temperatur 180 min lang gehalten. Der Ansatz wird durch Zugabe einer äquimolaren Menge konzentrierter Essigsäure neutralisiert. Das Produkt wird abfiltriert und zweimal mit je 2.000 Teilen einer Mischung aus 8 Teilen Aceton und 2 Teilen Wasser und anschließend noch mit 2.000 Teilen reinem Aceton gewaschen. Das Produkt wird in einem Umlufttrockenschrank bei 50 °C getrocknet.

Herstellung einer Hydroxypropylsulfoethylcellulose aus einer Sulfoethylcellulose (Beispiele 3, 7, 9)

Herstellung der Sulfoethylcellulose (Beispiele 2, 8, Ausführungsbeispiel 6)

In einem mit einem geeigneten Rühraggregat versehenen zylindrischen Reaktionsgefäß, das in geeigneter Weise thermostatisierbar ist, werden unter Stickstoffatmosphäre 128,6 Teile eines Linters-Zellstoffes (Feuchte: 5,5 %) in 2.188 Teilen Isopropanol suspendiert. Nach Zugabe von 56,7 Teilen einer 51,6 gew.-%igen Lösung von Vinylsulfonsäure-Natriumsalz wird 15 min lang gründlich durchmischt. Dann werden 181,5 Teile Wasser und 45 Teile Natriumhydroxid-Plätzchen (Prills) zugegeben und bei 25 °C 80 min lang alkalisiert. Innerhalb von 60 min wird auf 75 °C erwärmt und diese Temperatur 180 min lang gehalten. Der Ansatz wird durch Zugabe einer äquimolaren Menge konzentrierter Essigsäure neutralisiert, das Produkt abfiltriert und viermal mit je ca. 2.000 Teilen einer Mischung aus 8 Teilen Aceton und 2 Teilen Wasser und anschließend noch mit 2.000 Teilen reinem Aceton gewaschen. Das Produkt wird im Umlufttrockenschrank bei 50 °C getrocknet. Die Produktherstelldaten für die Sulfoethylcellulosen Nr. 2, 6 und 8 sind in Tabelle 1 aufgeführt.

Herstellung der Hydroxypropylsulfoethylcellulose (Beispiel 7)

Die oben hergestellte Sulfoethylcellulose (Beispiel 6) wird in etwa 2.000 Teilen einer Mischung aus 8 Teilen Aceton und 2 Teilen Wasser eingegeben. Nach 12 h wird der Celluloseether abfiltriert und mit etwa 2.000 Teilen reinem Isopropanol gewaschen und scharf abfiltriert. 232 Teile der isopropanolfeuchten Sulfoethylcellulose werden in einen Druckreaktor eingegeben. Der Reaktor wird mit Stickstoff gespült. 38 Teile Wasser und 16 Teile einer 49,9 gew.-%igen Natriumhydroxydlösung werden unter Rühren aufgedüst. Bei 25 °C wird 30 min lang alkalisiert. Unter ständigem Rühren werden 280 Teile Propylenoxid aufgedüst. Innerhalb von 150 min wird auf 80 °C erwärmt.

Diese Temperatur wird 60 min lang gehalten. Nach Neutralisation mit einer äquimolaren Menge konzentrierter Essigsäure wird das Produkt abfiltriert, dreimal mit je 2.000 Teilen einer Mischung aus 8,5 Teilen Aceton und 1,5 Teilen Wasser und anschließend noch mit 2.000 Teilen reinem Aceton gewaschen. Das Produkt wird im Umlufttrockenschrank bei 50 °C getrocknet. Die Produktherstelldaten für die Hydroxypropylsulfoethylcellulosen Nr. 3, 7 und 9 gehen aus Tabelle 1 hervor.

Herstellung einer Hydroxypropylsulfoethylcellulose im Eintopf-Verfahren (Beispiele 4 und 5, Ausführungsbeispiel 4)

87,1 Teile eines feingemahlenen, gebleichten und veredelten Fichtensulfit-Zellstoffes (Feuchte: 6,9 %) werden in einem Druckreaktor mit einen wandgängigen Flügelrührer in 1.066 Teilen tertiär-Butanol suspendiert. Der Reaktor wird mit Stickstoff gespült. 101,5 Teile Wasser und 13,1 Teile einer 49,5 gew.-%igen Vinylsulfonsäure-Natriumsalzlösung werden hinzugegeben. Die Mischung wird 15 min lang gerührt. 39,2 Teile einer 50,1 gew.-%igen Natriumhydroxidlösung und 280 Teile Propylenoxid werden aufgedüst und 80 min bei 25 °C alkalisiert. Anschließend wird innerhalb von 60 min auf 70 °C aufgeheizt und diese Temperatur 180 min lang gehalten. Mit einer äquimolaren Menge konzentrierter Essigsäure wird neutralisiert. Das Produkt wird abfiltriert und dreimal mit je 2.000 Teilen einer Mischung aus 8 Teilen Methanol und 2 Teilen Wasser und anschließend noch mit 2.000 Teilen reinem Methanol gewaschen. Das Produkt wird im Umlufttrockenschrank bei 50 °C getrocknet. Die Herstelldaten für die Hydroxypropylsulfoethylcellulosen Nr. 4 und 5 gehen aus Tabelle 1 hervor.

Herstellung einer Methylsulfoethylcellulose (Beispiel 10)

68,6 Teile eines feingemahlenen, gebleichten und veredelten Fichtensufit-Zellstoffes (Feuchte: 5,5 %) werden in einem Druckreaktor mit einem wandgängigen Flügelrührer in 1.077 Teilen tertiär-Butanol suspendiert. Der Reaktor wird mit Stickstoff gespült. 11,9 Teile Wasser und 118 Teile einer 54,1 gew.-%igen wäßrigen Vinylsulfonsäure-Natriumsalzlösung werden hinzugegeben und die Mischung 15 min lang gerührt. 62,9 Teile einer 50 gew.-%igen Natriumhydroxidlösung werden aufgedüst. Die Alkalisierung erfolgt bei 25 °C während 80 min. Anschließend werden 121 Teile Methylchlorid aufgedüst und innerhalb von 60 min auf 70 °C erhitzt. Diese Temperatur wird 180 min lang gehalten. Nach Abkühlung auf Raumtemperatur wird das Produkt abfiltriert und viermal mit je 2.000 Teilen einer Mischung aus 8 Teilen Aceton und 2 Teilen Wasser und schließlich noch mit 2.000 Teilen Ethanol gewaschen. Das Produkt wird im Umlufttrockenschrank bei 50 °C getrocknet.

Herstellung einer hydrophobmodifizierten Hydroxyethylsulfoethylcellulose auf Basis Hydroxyethylcellulose (Beispiele 11, 12, 15, 16, Ausführungsbeispiel 14)

225 Teile einer handelsüblichen Hydroxyethylcellulose (HEC, MS = 2,5; Feuchte: 5,1 %) werden in etwa 2.000 Teilen einer Mischung aus 8 Teilen Aceton und 2 Teilen Wasser eingegeben. Nach 12 h wird der Celluloseether abfiltriert und mit etwa 2.000 Teilen reinem Aceton gewaschen. Der Celluloseether wird scharf abgesaugt und für die weitere Umsetzung in ein zylindrisches, in geeigneter Weise thermostatisierbares Reaktionsgefäß, das mit einem geeigneten Rühraggregat versehen ist, eingegeben. Unter Stickstoffatmosphäre wird der Celluloseether in 2.180 Teilen tertiär-Butanol suspendiert. 96 Teile Wasser, 169 Teile einer 30,2 gew.-%igen wäßrigen Vinylsulfonsäure- Natriumsalzlösung und 18,3 Teile des Hydrophobierungsmittels (hier: Isopropyl-Glycidether) werden hinzugegeben. Die Mischung wird 15 min lang gründlich gerührt. Nach Zugabe von 15,7 Teilen Natriumhydroxid-Plätzchen (Prills) wird 30 min lang bei 25 °C alkalisiert. In 60 min wird auf 75 °C aufgeheizt und 180 min bei dieser Temperatur verethert. Der Ansatz wird durch Zugabe einer äquimolaren Menge konzentrierter Essigsäure neutralisiert, das Produkt abfiltriert und viermal mit je 2.000 Teilen einer Mischung aus 8 Teilen Aceton und 2 Teilen Wasser und anschließend noch mit 2.000 Teilen reinem Aceton gewaschen. Das Produkt wird im Umlufttrockenschrank bei 50 °C getrocknet. Die Produktherstelldaten für die Beispiele 11, 12, 14, 15 und 16 gehen aus Tabelle 1 hervor.

Herstellung einer Hydroxyethylhydroxypropylsulfoethylcellulose (Beispiel 13)

87,1 Teile eines feingemahlenen, gebleichten und veredelten Fichtensulfit-Zellstoffes (Feuchte: 6,9 %) werden in einem Druckreaktor mit einem wandgängigen Flügelrührer in 1.066 Teilen tertiär-Butanol suspendiert. Der Reaktor wird mit Stickstoff gespült. 12,9 Teile einer 50,5gew.-%igen Vinylsulfonsäure-Natriumsalzlösung und 137,6 Teile Wasser werden hinzugegeben und die Mischung 15 min lang gerührt. 30 Teile Natriumhydroxid-Plätzchen (Prills) werden hinzugegeben. Nach erfolgter Alkalisierung von 60 min bei 25° C, werden 11 Teile Ethylenoxid und 116 Teile Propylenoxid aufgedüst. Das Reaktionsgemisch wird innerhalb von 100 min auf 80° C erhitzt. Diese Temperatur wird 180 min lang gehalten. Mit einer äquimolaren Menge konzentrierter Essigsäure wird neutralisiert, das Produkt abfiltriert und dreimal mit je 2.000 Teilen einer Mischung aus 8 Teilen Aceton und 2 Teilen Wasser und schließlich noch mit reinem Aceton gewaschen. Das Produkt wird im Umlufttrockenschrank bei 50° C getrocknet.

Die erfindungsgemäß beanspruchten Celluloseether wurden mit einem fertig formulierten Gips-Maschinen-Putz (Anhydrit-Stuckgips, Kalksteinsand, Kalkhydrat, Verzögerer) ausgetestet. Die Zusammensetzung des Putzsystemes kann, neben dem anionischen Cellulosederivat, weitere Zusätze enthalten, die die Eigenschaften und das rheologische Verhalten des Putzsystemes verbessern. Als Zusätze können z.B. Verzögerer, Abbindebeschleuniger, Entschäumer, Luftporenbildner und Hydrophobierungsmittel eingesetzt werden (s. hierzu auch: I. Schrage in "Ullmanns Encyclopädie der technischen Chemie", Bd. 9, Verlag Chemie, Weinheim/New York, 1974, Seite 312 ff und dort zitierte Literatur).

In den nachfolgend aufgeführten Tabellen bedeuten Mengenangaben Gewichtsteile. Die Messung der Viskositäten erfolgte mit einem Rotationsviskosimeter Haake, Typ RV 100, System M 500, Meßeinrichtung MV, nach DIN 53.019, bei einem Schergefälle von $D = 2,5 \, s^{-1}$ bei einer Temperatur von 20° C. Es wurden jeweils 2gew.-%ige Lösungen in destilliertem Wasser gemessen. Die Celluloseether wurden mittels einer Siebmaschine mit Sieben nach DIN 4188 ausgesiebt. Dabei kamen folgende zwei Fraktionen in das Putzsystem:

$$45 \, \% < 0,063 \, \text{mm},$$

$$55 \, \% < 0,25 \, \text{mm}.$$

Zur Austestung wurde ein fertig formulierter Gipsmaschinenputz bereitgestellt und nach DIN 18.555, Teil 2, die Konsistenz durch Ermittlung des Ausbreitmaßes bestimmt. Die Bestimmung des Wasserrückhaltevermögens erfolgte nach DIN 18.555, Teil 7. Der Wasser-Feststoff-Faktor wurde eingestellt. Die erfindungsgemäß beanspruchten sulfoethylsubstituierten Cellulosederivate wurden jeweils mit einer handelsüblichen Methylhydroxyethylcellulose entsprechender Viskosität verglichen.

In Tabelle 1 sind die Herstellbedingungen, in Tabelle 2 die Substitutionsgrade und in Tabelle 3 die Ergebnisse der Austestung verschiedener sulfoethylsubstituierter Cellulosederivate im Vergleich mit einer handelsüblichen Methylhydroxyethylcellulose (Walocel® M) vergleichbarer Viskosität aufgeführt. Die Ergebnisse stellen Mittelwerte aus jeweils zwei Messungen dar.

**Tabelle 1: Sulfoethylmodifizierte Celluloseether**
**Herstelldaten**

| Nr. | tertiär Butanol (Teile) | Linters- zell- stoff (Teile) | Cellulose ether HEC[3] (Teile) | SEC[4] (Teile) | VSSNa-Lösung[5] (Teile) | (Gew.-%) | NaOH-Lösung (Teile) | (Gew.-%) |
|---|---|---|---|---|---|---|---|---|
| 1 | 2.180 | - | 225 | - | 119,4 | 51,4 | 15,7 | 100 |
| 2 | 2.192 | 134,6 | - | - | 19,4 | 52,7 | 47,2 | 100 |
| 3 | - | - | - | 215 | - | - | 16,0 | 100 |
| 4 | 1.066 | 87,1[2] | - | - | 13,1 | 49,5 | 39,2 | 50,1 |
| 5 | 1.066 | 87,1[2] | - | - | 13,1 | 49,5 | 39,2 | 50,1 |
| 6 | 2.188[1] | 128,6 | - | - | 56,7 | 51,6 | 45,0 | 100 |
| 7 | - | - | - | 232 | - | - | 16,0 | 49,9 |
| 8 | 2.188[1] | 128,6 | - | - | 113,9 | 51,4 | 45,0 | 100 |
| 9 | - | - | - | 312 | - | - | 16,0 | 49,9 |
| 10 | 1.077 | 68,6[2] | - | - | 118 | 54,1 | 62,9 | 50,0 |
| 11 | 2.325 | - | 225 | - | 59,5 | 51,6 | 15,7 | 100 |
| 12 | 2.325[1] | - | 225 | - | 59,5 | 51,6 | 15,7 | 100 |
| 13 | 1.066 | 87,1[2] | - | - | 12,9 | 50,5 | 30,0 | 100 |
| 14 | 2.180 | - | 225 | - | 169,0 | 30,2 | 15,7 | 100 |
| 15 | 2.180 | - | 226 | - | 169,2 | 30,2 | 15,7 | 100 |
| 16 | 2.180 | - | 226 | - | 169,2 | 30,2 | 15,7 | 100 |

1) Isopropanol
2) Fichtensulfit-Zellstoff
3) Hydroxyethyl-Cellulose (MS=2,5) (Feuchte: 5,1 %)
4) Sulfoethylcellulose
5) Vinylsulfonsäure-Natriumsalz-Lösung
6) IPGE:     Isopropylglycidether
   n-BGE:   n-Butylglycidether
   PO:        Propylenoxid
   BO:        Butylenoxid
   ME:       Methylchlorid
   EO:        Ethylenoxid

EP 0 554 751 B1

Tabelle 1 - Fortsetzung

| Nr. | Reagenz[6] | | | | | | $H_2O$ | Alkalisierzeit | Aufheizzeit | Reaktionszeit | -temperatur |
|---|---|---|---|---|---|---|---|---|---|---|---|
| | IPGE | n-BGE | PO | BO | ME | EO | | | | | |
| | (T e i l e) | | | | | | (Teile) | (min) | (min) | (min) | (°C) |
| 1 | - | - | - | - | - | - | 157 | 30 | 60 | 180 | 75 |
| 2 | - | - | - | - | - | - | 193,6 | 80 | 60 | 120 | 80 |
| 3 | - | - | 175 | - | - | - | 54,0 | 30 | 150 | 60 | 80 |
| 4 | - | - | 280 | - | - | - | 101,5 | 80 | 60 | 180 | 70 |
| 5 | - | - | 280 | - | - | - | 101,5 | 80 | 60 | 180 | 70 |
| 6 | - | - | - | - | - | - | 181,5 | 80 | 60 | 180 | 75 |
| 7 | - | - | 280 | - | - | - | 38,0 | 30 | 150 | 60 | 80 |
| 8 | - | - | - | - | - | - | 153,6 | 80 | 60 | 180 | 75 |
| 9 | - | - | 280 | - | - | - | 38,0 | 30 | 150 | 60 | 80 |
| 10 | - | - | - | - | 121 | - | 11,9 | 80 | 60 | 180 | 70 |
| 11 | - | - | - | 339 | - | - | 13,6 | 30 | 60 | 60 | 75 |
| 12 | - | - | - | 113 | - | - | 13,6 | 30 | 60 | 300 | 75 |
| 13 | - | - | 116 | - | - | 11 | 137,6 | 60 | 100 | 180 | 80 |
| 14 | 18,3 | - | - | - | - | - | 96,0 | 30 | 60 | 180 | 75 |
| 15 | 54,8 | - | - | - | - | - | 96,3 | 30 | 60 | 180 | 75 |
| 16 | 73,0 | - | - | - | - | - | 96,3 | 30 | 60 | 180 | 75 |

1) Isopropanol
2) Fichtensulfit-Zellstoff
3) Hydroxyethyl-Cellulose (MS=2,5) (Feuchte: 5,1 %)
4) Sulfoethylcellulose
5) Vinylsulfonsäure-Natriumsalz-Lösung
6) IPGE:    Isopropylglycidether
   n-BGE:   n-Butylglycidether
   PO:    Propylenoxid
   BO:    Butylenoxid
   ME:    Methylchlorid
   EO:    Ethylenoxid

EP 0 554 751 B1

Tabelle 2: Sulfoethylmodifizierte Celluloseether
Substitutionsgrade

| Nr. | Celluloseether | $DS_{SE}$[1] | $MS_{HE}$[2] | $MS_{HP}$[3] | $MS_{HB}$[4] | $MS_{IP}$[5] | $DS_{OCH_3}$[6] |
|---|---|---|---|---|---|---|---|
| 1 | Hydroxyethyl-Sulfoethylcellulose | 0,07 | 2,43 | - | - | - | - |
| 3 | Hydroxypropyl-Sulfoethylcellulose | 0,05 | - | 1,96 | - | - | - |
| 4 | Hydroxypropyl-Sulfoethylcellulose | 0,06 | - | 1,54 | - | - | - |
| 5 | Hydroxypropyl-Sulfoethylcellulose | 0,06 | - | 1,52 | - | - | - |
| 7 | Hydroxypropyl-Sulfoethylcellulose | 0,17 | - | 2,67 | - | - | - |
| 9 | Hydroxypropyl-Sulfoethylcellulose | 0,30 | - | 2,59 | - | - | - |
| 10 | Methyl-Sulfoethylcellulose | 0,45 | - | - | - | - | 1,13 |
| 11 | Hydroxyethyl-Hydroxybutyl-Sulfo-ethylcellulose | 0,11 | 3,07 | - | 0,29 | - | - |
| 12 | Hydroxyethyl-Hydroxybutyl-Sulfo-ethylcellulose | 0,16 | 3,17 | - | 0,34 | - | - |
| 13 | Hydroxyethyl-Hydroxypropyl-Sulfo-ethylcellulose | 0,04 | 0,63 | 0,69 | - | - | - |
| 14 | 3-(2'-Methyl)-Ethoxy-2-hydroxypro-pyl-Hydroxyethyl-Sulfoethylcellu-lose | 0,24 | 3,2 | - | - | - | 0,058 |
| 15 | 3-(2'-Methyl)-Ethoxy-2-hydroxypro-pyl-Hydroxyethyl-Sulfoethylcellu-lose | 0,26 | 3,5 | - | - | - | 0,21 |
| 16 | 3-(2'-Methyl)-Ethoxy-2-hydroxypro-pyl-Hydroxyethyl-Sulfoethylcellu-lose | 0,31 | 3,6 | - | - | - | 0,295 |

1) Durchschnittlicher Substitutionsgrad durch Sulfoethylgruppen
2) Molekularer Substitutionsgrad durch Hydroxyethylgruppen
3) Molekularer Substitutionsgrad durch Hydroxypropylgruppen
4) Molekularer Substitutionsgrad durch Hydroxybutylgruppen
5) Molekularer Substitutionsgrad durch 3-(2'-Methyl)-Ethoxy-2-hydroxypropylgruppen
6) Durchschnittlicher Substitutionsgrad durch Methylgruppen

EP 0 554 751 B1

Tabelle 3

| Sulfoethylmodifizierte Celluloseether Anwendungstechnische Austestungen im Baustoffbereich | | | | | | | | |
| Nr. | Celluloseether | | | | | Vergleichsprobe[5] | | |
| | | Viskosität[1] (mPa·s) | W/F[2] | ABM[3] (mm) | WRV[4] (%) | W/F[2] | ABM[3] (mm) | W RV[4] (%) |
|---|---|---|---|---|---|---|---|---|
| 1 | Hydroxyethyl-Sulfoethylcellulose | 16.900 | 0,48 | 168 | 94,2 | 0,48 | 172 | 92,7 |
| 3 | Hydroxypropyl-Sulfoethylcellulose | 9.250 | 0,46 | 168 | 94,7 | 0,46 | 166 | 92,0 |
| 4 | Hydroxypropyl-Sulfoethylcellulose | 17.050 | 0,48 | 172 | 94,5 | 0,48 | 172 | 92,7 |
| 5 | Hydroxypropyl-Sulfoethylcellulose | 30.820 | 0,46 | 163 | 96,8 | 0,46 | 163 | 96,2 |
| 7 | Hydroxypropyl-Sulfoethylcellulose | 12.580 | 0,46 | 172 | 95,8 | 0,46 | 166 | 92,0 |
| 9 | Hydroxypropyl-Sulfoethylcellulose | 12.830 | 0,46 | 172 | 97,4 | 0,46 | 166 | 92,0 |
| 10 | Methyl-Sulfoethylcellulose | 11.800 | 0,46 | 170 | 96,3 | 0,46 | 166 | 92,0 |
| 11 | Hydroxyethyl-Hydroxybutyl-Sulfoethylcellulose | 13.020 | 0,46 | 168 | 93,8 | 0,46 | 166 | 92,0 |
| 12 | Hydroxyethyl-Hydroxybutyl-Sulfoethylcellulose | 10.150 | 0,46 | 173 | 93,2 | 0,46 | 166 | 92,0 |
| 13 | Hydroxyethyl-Hydroxypropyl-Sulfoethylcellulose | 11.470 | 0,46 | 171 | 93,2 | 0,46 | 166 | 92,0 |
| 14 | 3-(2'-Methyl)-Ethoxy-2-hydroxypropyl-Hydroxyethyl-Sulfoethylcellulose | 25.083 | 0,46 | 163 | 98,2 | 0,46 | 166 | 94,6 |
| 15 | 3-(2'-Methyl)-Ethoxy-2-hydroxypropyl-Hydroxyethyl-Sulfoethylcellulose | 20.660 | 0,48 | 167 | 95,1 | 0,48 | 172 | 92,7 |
| 16 | 3-(2'-Methyl)-Ethoxy-2-hydroxypropyl-Hydroxyethyl-Sulfoethylcellulose | 21.020 | 0,48 | 159 | 93,7 | 0,48 | 172 | 92,7 |

Erläuterungen zur Tabelle 3:
1) Viskosität einer 2gew.-%igen Lösung bei 20°C, gemessen mit einem Rotationsviskosimeter Haake, Typ RV 100, bei einem Schergefälle von D = 2,5 m$^{-1}$
2) Wasser-Feststoff-Faktor
3) Ausbreitmaß
4) Wasserrückhaltevermögen
5) Methylhydroxyethylcellulose, Walocel® M (Wolff Walsrode AG)

**Patentansprüche**

1. Wasserlöslicher, ionischer, sulfoalkylmodifizierter, insbesondere sulfoethylmodifizierter Celluloseether als Additiv für gips- und/oder zementhaltige Putzsysteme, dadurch gekennzeichnet, daß der wasserlösliche, sulfoalkylierte Celluloseether mit Epoxiden und/oder Alkyl- und/oder Arylalkylhalogeniden und/oder 3-alkoxy-2-hydroxypropylgruppenübertragenden Reagenzien verethert ist.

2. Additiv nach Anspruch 1, dadurch gekennzeichnet, daß es sich bei dem wasserlöslichen, ionischen Celluloseether um ein sulfoethylsubstituiertes Cellulosederivat mit einem Sulfoethylsubstitutionsgrad (DS) von 0,001 bis 0,6, insbesondere 0,01 bis 0,5, handelt.

3. Additiv nach einem der Ansprüche 1 oder 2, dadurch gekennzeichnet, daß das wasserlösliche Cellulosederivat einen Durchschnittspolymerisationsgrad (DP) von 30 bis 4 000, insbesondere 1 000 bis 2 500, aufweist.

4. Additiv nach mindestens einem der Ansprüche 1 bis 3, dadurch gekennzeichnet, daß der wasserlösliche Celluloseether Viskositäten in 2 gew.-%iger wäßriger Lösung im Bereich 5 bis 60000 mPa·s (Rotationsviskosimeter) bei einer Schergeschwindigkeit von $D = 2,2$ s$^{-1}$ und einer Temperatur von 20°C besitzt.

**Claims**

1. Water-soluble, ionic, sulfoalkyl-modified, in particular sulfoethyl-modified, cellulose ethers as an additive for rendering systems containing gypsum and/or cement, characterised in that the water-soluble, sulfoalkylated cellulose ether is etherified with epoxides and/or alkyl halides and/or arylalkyl halides and/or reagents which transfer 3-alkoxy-2-hydroxypropyl groups.

2. Additive according to claim 1, characterised in that the water-soluble, ionic cellulose ether comprises a sulfoethyl-substituted cellulose derivative with a sulfoethyl degree of substitution (DS) of 0.001 to 0.6, in particular 0.01 to 0.5.

3. Additive according to one of claims 1 or 2, characterised in that the water-soluble cellulose derivative has an average degree of polymerisation (DP) of 30 to 4000, in particular of 1000 to 2500.

4. Additive according to at least one of claims 1 to 3, characterised in that the water-soluble cellulose ether has viscosities in a 2 wt.% aqueous solution in the range from 5 to 60000 mPa·s (rotational viscosimeter) at a shear rate of $D = 2.2$ s$^{-1}$ and a temperature of 20°C.

**Revendications**

1. Additif à base d'éther de cellulose hydrosoluble ionique modifié par des groupes sulfoalkyle, notamment par des groupes sulfoéthyle, pour des systèmes d'enduits contenant du plâtre et/ou du ciment, caractérisé en ce que l'éther cellulosique hydrosoluble sulfoalkylé est éthérifié avec des époxydes et/ou des halogénures d'alkyle et/ou d'arylalkyle et/ou des réactifs de transfert de groupes 3-alkoxy-2-hydroxypropyle.

2. Additif suivant la revendication 1, caractérisé en ce que l'éther cellulosique ionique hydrosoluble est un dérivé de cellulose à substituant sulfo-éthyle ayant un degré de substitution (DS) sulfoéthylique de 0,001 à 0,6, notamment de 0,01 à 0,5.

3. Additif suivant l'une des revendications 1 et 2, caractérisé en ce que le dérivé cellulosique hydrosoluble a un degré de polymérisation moyen (DP) de 30 à 4000, notamment de 1000 à 2500.

4. Additif suivant au moins l'une des revendications 1 à 3, caractérisé en ce que l'éther cellulosique hydrosoluble possède des viscosités, en solution aqueuse à 2 % en poids, dans la plage de 5 à 60 000 MPa.s (viscosimètre rotatif) à une vitesse de cisaillement $D = 2,2$ s$^{-1}$ et à une température de 20°C.